Europäisches Patentamt

(19) European Patent Office

Office européen des brevets

(11) **EP 1 194 894 B1**

(12) **EUROPEAN PATENT SPECIFICATION**

(45) Date of publication and mention
of the grant of the patent:
**06.08.2003 Bulletin 2003/32**

(51) Int Cl.⁷: **G06T 5/20**

(21) Application number: **00937362.2**

(86) International application number:
**PCT/NL00/00359**

(22) Date of filing: **25.05.2000**

(87) International publication number:
**WO 00/073993 (07.12.2000 Gazette 2000/49)**

(54) **METHOD FOR DATA PROCESSING**

DATAVERARBEITUNGSVERFAHREN

PROCEDE DE TRAITEMENT DE DONNEES

(84) Designated Contracting States:
**AT BE CH CY DE DK ES FI FR GB GR IE IT LI LU
MC NL PT SE**

(30) Priority: **31.05.1999 NL 1012198**

(43) Date of publication of application:
**10.04.2002 Bulletin 2002/15**

(73) Proprietor: **Essential Resource B.V.**
**3603 AP Maarssen (NL)**

(72) Inventor: **EIJKELHOF, Rogier**
**NL-6814 HR Arnhem (NL)**

(74) Representative: **Visser-Luirink, Gesina, Dr.**
**Octrooibureau Lioc,**
**P.O. Box 13363**
**3507 LJ Utrecht (NL)**

(56) References cited:
**US-A- 4 853 794**          **US-A- 5 134 503**
**US-A- 5 561 724**

• **WALLIS J W ET AL: "AN OPTIMAL ROTATOR
FOR ITERATIVE RECONSTRUCTION" IEEE
TRANSACTIONS ON MEDICAL
IMAGING,US,IEEE INC. NEW YORK, vol. 16, no.
1, 1 February 1997 (1997-02-01), pages 118-123,
XP000685496 ISSN: 0278-0062**
• **JENSEN K ET AL: "SUBPIXEL EDGE
LOCALIZATION AND THE INTERPOLATION OF
STILL IMAGES" IEEE TRANSACTIONS ON
IMAGE PROCESSING,US,IEEE INC. NEW YORK,
vol. 4, no. 3, 1 March 1995 (1995-03-01), pages
285-295, XP000501903 ISSN: 1057-7149**

**Description**

The present invention relates to a method for processing data in the form of a grid of discrete source values, wherein at least one target value within a region of source values is determined by means of interpolation in said region of source values.

Such a method can be used for data of diverse nature, and particularly to expand, compress or decompress computer data with a non-critical bit value, such as for instance sound and animation files. The starting point is always a one- or multi-dimensional grid of discrete source values among which concrete target values have to be predicted by means of interpolation. The source values herein comprise numerical values which, in the case of for instance an image, indicate the colour intensity of a basic colour present therein and, in the case of a sound file, represents the frequency, i.e. the pitch, or the intensity thereof. In the case of other types of data a different information component in the source data will similarly be taken as measure.

For digital images there exists a number of more or less standardized forms in which the data is stored. The so-called bitmap format is for instance a form wherein the data is stored in a series of discrete numerical values. This series can be converted comparatively simply into a two-dimensional matrix of source values which each indicate the colour intensity of pixels corresponding therewith. In a monochromatic image there thus results a single matrix, while in a colour image such a matrix can be constructed for each of the basic colours.

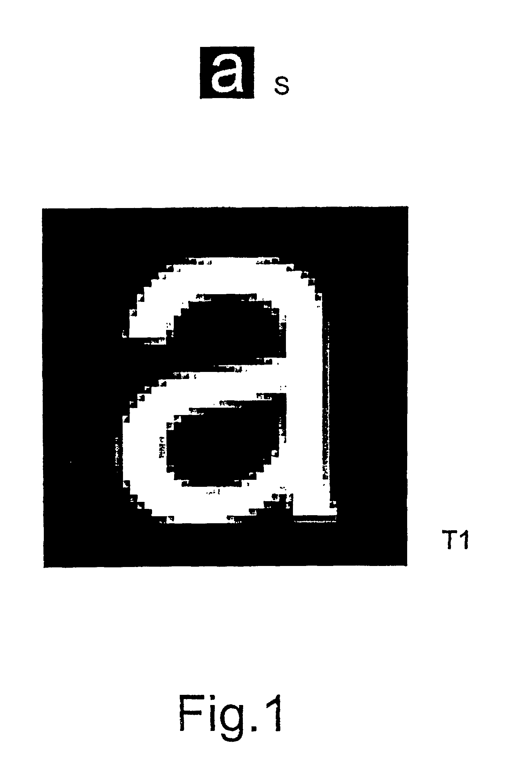

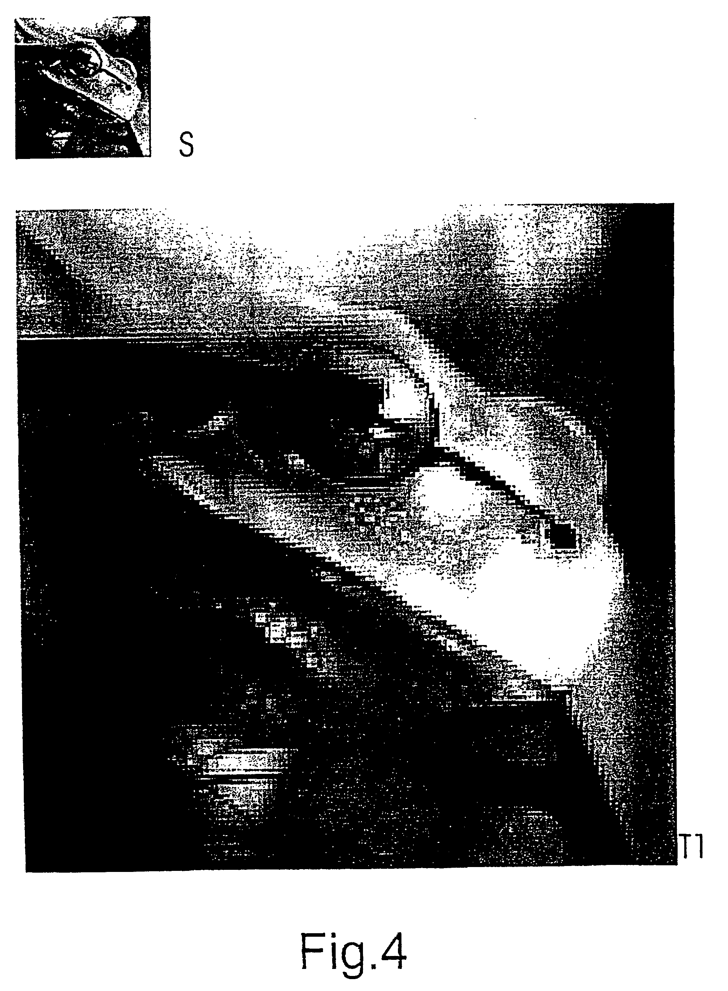

One of the simplest ways of enlarging such an image is to expand the discrete pixels. The result hereof is shown in figures 1 and 4, wherein the lower image T 1 is roughly a five-fold enlargement of the source image S. It can be seen clearly that such a method of enlargement detracts significantly from the resolution of the final image. Because each pixel of the source image S reappears in the result T1 as a rectangular image area of a uniform colour (intensity), a clear block structure is created which does not correspond with the original source image.

A better result is obtained by determining target values among the source values in the output data by interpolation. An example of an existing method of this case is given in **J.D. Wallis et al.**: "An Optimal Rotator for Iterative Reconstruction", IEEE Transactions on Medical Imaging, IEEE Inc., US, New York, vol. 16, no. 1, 1 February 1997, pages 118-123, XP000685496 ISSN: 0278-0062. In this case the method is used for image rotation in which the pixels of the rotated image are calculated on the basis of a weighted Gaussian interpolation of the source values within the original image, in order to determine pixel values at fractional pixel locations.

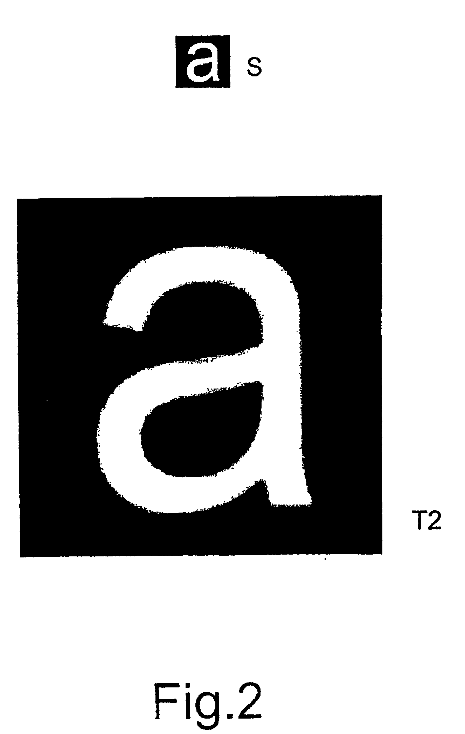

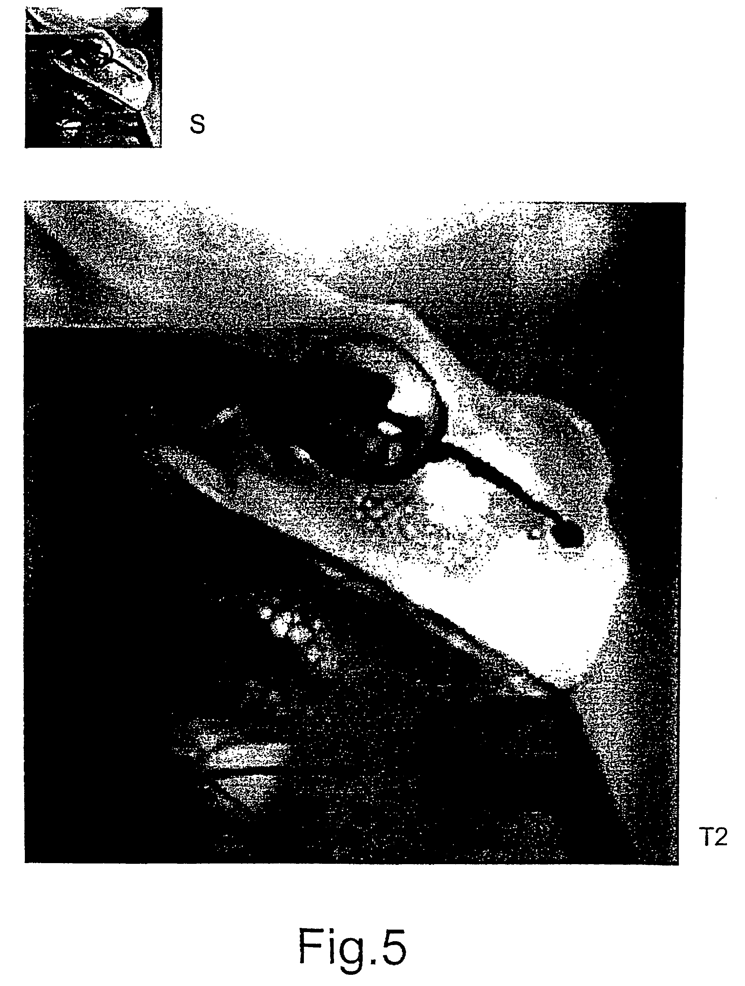

Likewise, in the case of expanding a colour image, the most probable colour value of an intermediate target value may be determined on the basis of a weighted average of the colour values of the surrounding pixels, wherein a heavier weighting is normally assigned to pixels located closer than to pixels located further away. The result of such a method, which is applied by many modem graphic computer programs in a form which may differ somewhat from each other, is shown in figures 2 and 5.The point of departure is the same source image S and the same enlargement factor as in the other figures to obtain the end result T2. A block structure as in a simple pixel expansion is thus avoided to a significant extent in that pixels of the source material S are as it were smeared in the end result T2.While for an image such as that in figure 5 this does produce a reasonable result, the image of figure 2 still loses a lot of its definition because the edges of the image become relatively blurred. Such blurred edges are relatively unavoidable assuming an interpolation technique since interpolation between black and white as in the present image will always produce a certain grey value at the edges. The larger the enlargement chosen, the more pronounced this effect will be.

The present invention has for its object to provide a method of the type stated in the preamble which to at least a significant extent prevents such a blurring of the image, so that the quality of the image is better preserved.

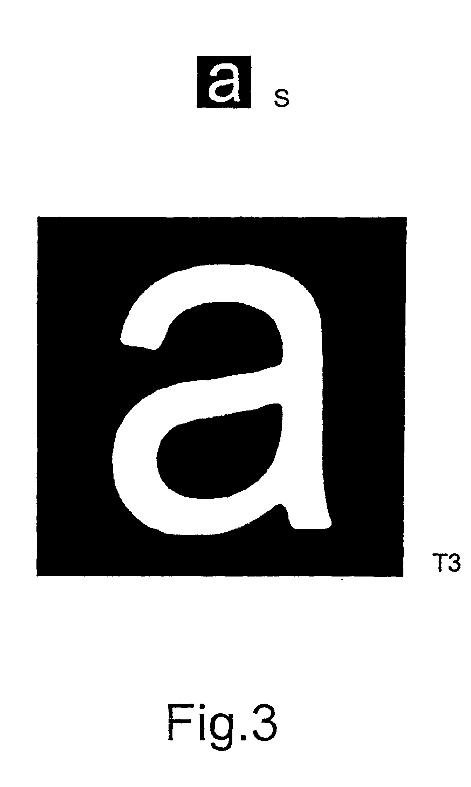

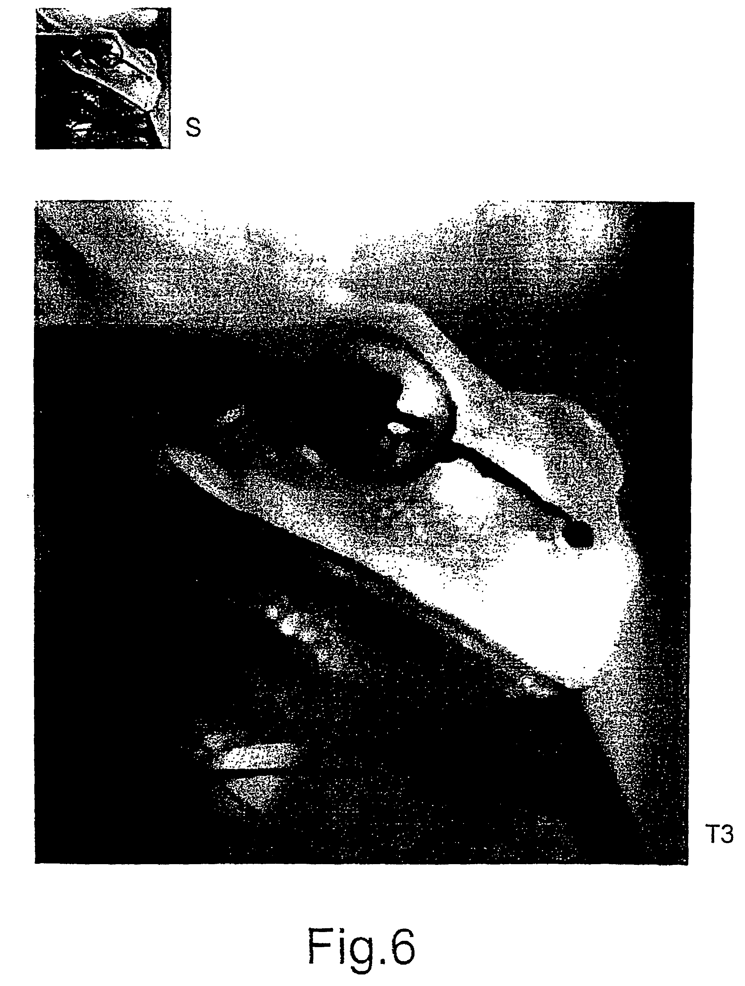

In order to achieve the stated object, a method of the type as described in the opening paragraph is characterized in that a minimum value ($I_{min}$) and a maximum value ($I_{max}$) are determined within a local region of source values around the target value, in that a measure of the dynamics is determined within a local region of source values around the target value and in that the target value is calculated by weighted interpolation is adjusted in the direction of either said minimum value or said maximum value on the basis of said determined measure of the dynamics. Not only is an intermediate value herein determined by interpolation, an analysis is also carried out in the source data in order to define the dynamics or contrast thereof in at least the region where a new target value has to be calculated. On the basis of the thus determined dynamics the interpolated value is adjusted more or less to the value of a local minimum or maximum. In the case of for instance an already relatively blurred source image, the thus adjusted target value will not differ from the interpolated value, or hardly so, but in the case of a relatively dynamic image with sharp local differences in the source values this adjustment will be capable of shifting the interpolated value considerably toward the local maximum or minimum so that the contrast in the source data is retained to a significant degree. The result T3 of an embodiment of the method according to the invention is illustrated in figures 3 and 6, utilizing the same source image S and expansion factor as in the other figures, and clearly shows the improvement compared to the existing expansion techniques.

In a particular embodiment the method according to the invention is characterized in that a source value which lies in the grid closest to the target value to be determined is taken as source of a region extending over a finite number of mutually adjacent source values and that the local maximum and the local minimum are determined in this region, In order to determine the local minimum and maximum for each target value which has to be calculated a uniform framework is herein always used as starting point with the same number of source values as reference. The same applies for the determining of the local dynamics of the source values in a further particular embodiment of the method according to the invention, characterized in that the measure for the dynamics of the source values is determined in a second region extending over a finite number of mutually adjacent source values, which second region is optionally of the same size as the first region in which the local maximum and minimum are determined.

In the context of the present invention local dynamics in the source values are understood to mean the degree in which the source values in the relevant region differ from each other and also the steepness with which these differences are present. A further particular embodiment of the method according to the invention comprises in this respect an algorithm which assigns a numerical value hereto and is characterized for this purpose in that the dynamics are derived from a normalized difference between a source value and an average of all source values in the second region. For the average of all source values in the second region a weighted average is herein preferably taken which assigns a heavier weighting to source values located closer in the grid than to source values located further away and which particularly utilizes a non-linear density distribution for the purpose of determining the weighting factors and more particularly a Gaussian distribution, at least an exponential density distribution.

In order to determine the different factors which play a part in predicting the target value within the scope of the invention, the starting point is always a number of source values in a finite first and second region as frame of reference. Relatively far-removed source values can be ignored because they make no or hardly any contribution towards the precision with which the target value is calculated and can even detract from this precision in that there is alack of any relationship with the target value for predicting. The calculation time of the method moreover increases when more source values are taken as frame of reference. Conversely, only one or two reference values will in many cases be too few to enable prediction of the target value in reliable manner. A particular embodiment of the method according to the invention has been found effective in practice wherein the first and second region both extend over nine source values in the grid.

The adjustment of the interpolated value to the local maximum or minimum within the scope of the present invention can be performed per se in diverse ways. A further particular embodiment of the method according to the invention is however characterized in that the final target value is a weighted average of the target value determined on the basis of interpolation and the local maximum and minimum, wherein a weighting factor is employed which depends on average local dynamics of the source values located around the target value and the relative location of the target value determined on the basis of interpolation relativeto the local maximum and minimum.

In order to determine the local minima, maxima and dynamics it isper se possible to carry out a separate calculation for each target value to be determined. A preferred embodiment of the method according to the invention is however characterized in that for all source values an associated local minimum and maximum and an associated dynamic value is determined beforehand so as to be read for the purpose of determining the target value. A calculation is herein performed once for all source values together in order to determine said values, so that these are then immediately available. This saves considerable calculation time since calculations which would otherwise be performed repeatedly now take up calculation time once-only.

The invention is not only suitable for data with only a single information component but also for data in the form of source values with separate numerical values for separate information components. In accordance with a further embodiment of the method according to the invention, for each information component a target value located among the sourcevalues is herein determined individually for this information component.

The invention will now be further elucidated with reference to an embodiment and an associated drawing. In the drawing:

figure1     shows the enlargement of a first image based on an existing technique making using of pixel expansion;

figure2     shows an enlargement of the first image based on a second existing technique making using solely of pixel interpolation;

figure 3    shows an enlargement of the first image based on an embodiment of the method according to the present invention;

figure 4    shows the enlargement of a second image based on an existing technique making using of pixel expansion;

figure 5    shows an enlargement of the second image based on a second existing technique making using solely of pixel interpolation; and

figure 6    shows an enlargement of the second image based on the embodiment of the method according to the present invention used in figure 3.

Although the invention lends itself in principle to any type of data wherein the exact bit value is not critical, it is best elucidated within the scope of the present invention on the basis of an example with graphic data in the form of an image S. The data on the basis of which the image can be constructed is possibly already in the form of a grid or matrix corresponding with the pixels of the image, with for each pixel a numerical source value indicating a colour value or, with a view to the method according to the invention, is brought into such a form. In the case of a monochromatic image the colour value amounts only to an intensity, for instance a grey value; in the case of a colour image this will be a set of for instance three values, one for each basic colour. A much used format in which images are digitally stored is the so-called bitmap format which, for each pixel of a colour image, comprises three channels of 8 bits each, and therefore has 256 values for each basic colour. This format can be employed relatively directly by the method according to the invention, other formats possibly require a conversion similar to that with which such a format is transferred to the (image) memory of a computer.

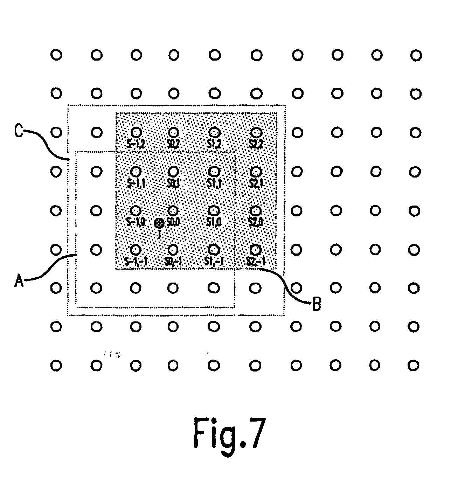

Assuming a black/white image S, a part of the thus assembled matrix is shown by the grid of figure 7, wherein the points in the grid represent the pixels of the source image S with for each grid point $S_{ij}$ a discrete value of $I_{ij}$ from 0 to 255 from the matrix to thereby designate the grey value of the relevant pixel. In order to enlarge such an image while retaining resolution, intermediate points have to be created, of which the value of the grey value has to be calculated. One of these points T is shown in the figure.

A first estimate of the grey value $I_t$ of the intermediate pixel T can be obtained by interpolation on the basis of the values of the surrounding pixels. The point of departure herefor in this example is a weighted average of the values of the surrounding pixels, wherein the weighting assigned to each pixel is highly dependent on its distance from T. A more particular point of departure herein for the weighting factors is a normalized Gaussian distribution, of which pixel T forms the origin. Because of the sharp fall in the weighting factors according to this curve, a finite region A of for instance 4x4 pixels around T suffices for the interpolation, which pixels are hatched in the figure. On the basis of this interpolation an interpolated grey value $P_t$ results for the pixel T to be calculated in accordance with the following relation:

$$P_t = \sum_{(i,j)\in A} G_{ij}.I_{ij}, \; where \; \sum_{(i,j)\in A} G_{ij}=1$$

According to the invention a local maximum and a local minimum around the pixel T to be calculated is also determined in addition to the interpolated value $P_t$. In the embodiment described here the starting point for this purpose is a reference region B of 4x4 pixels $S_{-1,-1}, S_{0,0}...S_{2,2}$, an origin $S_{0,0}$ of which is formed by the pixel in the original image lying just in front of the pixel T to be calculated. This region is shown hatched in the figure. A local maximum $I_{max}$ and a local minimum $I_{min}$ of the grey values of the original pixels are determined within this region.

In addition, the local dynamics in the grey values are determined according to the invention within a reference region around the pixel T for calculating. The starting point therefor in this embodiment is the same reference region B as that in which the local minimum and maximum have been determined. These dynamics provide a measure for the hardness or contrast of the image and are derived in this embodiment from the normalized average difference between the grey values of the pixels $S_{ij}$ in reference region B and a weighted average of the pixels in a reference region C of 5x5 pixels around the pixel $S_{ij}$ for which the local dynamics has to be calculated. This region C therefore differs for each pixel $S_{ij}$ and is indicated by way of example in the figure for $S_{00}$. This is expressed in the following formula:

$$D_{ij} = \sum_{(ij)\in B} G_{ij}.\left\| I_{ij} - I_{gem(i,j)} \right\|$$

where

$$I_{gem(ij)} = \sum_{(p,q)\in C_j} I_{pq}.G_{pq}' \; with \; \sum_{(i,j)\in B} G_{ij} = 1 \; and \; \sum_{(p,q)\in C_j} G_{pq} = 1$$

The starting point for the weighted average $I_{gem}$ here are weighting factors $G'_{pq}$ on the basis of a normalized Gaussian distribution which attributes a greater weighting to pixels close to the pixel T for calculating than to further removed pixels. For the resulting factor $D_{ij}$ there applies: $0 \leq D_{ij} \leq 1$. A value $D_{ij}= 1$ indicates that the source image in the relevant region is very hard, i.e. has very sharp transitions in intensity, while a value $D_{ij}=0$ indicates precisely the opposite, i.e. no differences in intensity occur within the region. The local dynamics $D_t$ associated with the pixel T to be calculated are derived from the weighted average of the values $D_{ij}$ from the reference region B around the pixel T to be calculated.

The grey value of the pixel T to be calculated is established by adjusting the interpolated value P, to the local maximum or minimum on the basis of the thus found hardness value $D_t$. Taken for this purpose in this embodiment is a weighted average of $P_t$ and the local maximum and minimum, wherein a weighting factor is applied which depends on the difference from $P_t$ and is proportional to the hardness value $D_t$. This is expressed for instance by the following formula applied in this example:

$$I_t = P_t.(1 - D_t) + D_t.\left[ \text{Im}_{in} + (\text{Im}_{ax} - \text{Im}_{in}).\sin_n\left( \frac{P_t - \text{Im}_{in}}{\text{Im}_{ax} - \text{Im}_{in}} \right) \right]$$

where $\sin_0(t) = \frac{1}{2} + \frac{1}{2}.\sin(\pi(t - \frac{1}{2})$ and $\sin_n(t) = \sin_0.\sin_{n-1}(t)$ with $n \approx 5$

If in the relevant reference region B the source image is completely level and has no differences in intensity, which is reflected by a value $D_t$=0, no shifting or adjustment of the interpolated value $P_t$, takes place. In the case of a comparatively hard image with great differences in intensity, wherein D will move in the direction of a value D= 1, the adjustment will in contrast be maximal. The final value $I_t$ will in that case be shifted to the local minimum or maximum, depending on which value lies closest to the interpolated value $P_t$, thereby resulting in more definition. The local dynamics of the original image S are thus taken into account in the final grey value $I_t$, which is calculated for the pixel T to be added.

The foregoing algorithm is applied for all pixels which have to be calculated among or adjacently of the original pixels in order to create the desired enlargement while retaining resolution. In practice this means that for all pixels of the original source image the associated local maxima, minima and average hardness values are calculated beforehand so that these are then immediately available for the above stated calculations. The stated algorithm allows of simple translation into computer software with which a suitable computer can be loaded to perform the calculations fully automatically. In a user interface adapted thereto setting options can be offered for fine-tuning of the size of the reference regions, the relations for the weighting factors and other parameters.

The result on the basis of this embodiment of the method according to the invention is shown in figures 3 and 6 for respectively a relatively hard source image in the form of a sharply defined character and a more variegated source image corresponding with a photographic image. It can clearly be seen that the definition of the character in figure 3 has been retained despite the great enlargement thereof, while the variegation in the image of figure 6 is retained with the method according to the invention and is even better preserved than on the basis of solely an interpolation method as shown in figure 5.

Although the invention has been further elucidated above with reference to only two embodiments, it will be apparent that the invention is by no means limited to the given embodiments. The invention can thus also be applied to images with more colours, wherein the above stated algorithm is applied separately to each basic colour. The invention can advantageously also be applied for the interpolation of sound data and other data with noncritical bit values while retaining dynamics. The above stated weighting factors and frames of reference, although very effective, have been given solely as examples. Depending on the concrete situation, a fine-tuning thereof can take place to further enhance the quality of the final result. Larger, smaller or identical reference regions can for instance thus be applied to calculate the various above stated factors and, in order to determine the final grey value of the pixel for calculating, a different algorithm can also be chosen which takes account of the local dynamics derived in this pixel and the local maximum and minimum.

The invention generally provides a method of interpolating data while retaining dynamics, which implies that the character and the definition of the source data is retained to a significant degree in the result.

## Claims

1. Method for processing data in the form of a grid of discrete source values, wherein at least one target value (T) within a region (A) of source values is determined by means of weighted interpolation in said region (A) of source values **characterised in that** a minimum value ($I_{min}$) and a maximum value ($I_{max}$) are determined within a local region (B) of source values around the target value (T), **in that** a measure of dynamics is determined within a local region (B) of source values around the target value (T) and **in that** the target value as calculated by weighted interpolation is adjusted in the direction of either said minimum value or said maximum value. on the basis of said determined measure of dynamics.

2. Method according to claim 1 **characterised in that** said measure of dynamics is determined as a normalized weighted value of the absolute differences ($\|I_{ij} - I_{gem}\|$) in source values within said local region (B).

3. Method according to claim 2 **characterized in that** one of said absolute differences ($\|I_{ij} - I_{gem(ij)}\|$) is calculated for each one of the source values in said local region (B), and **in that** each said difference ($\|I_{ij} - I_{gem(ij)}\|$) is calculated between a given one ($I_{ij}$, $ij \in B$) of said source values and a weighted average ($I_{gem(ij)}$) of source values in a further local region (C) corresponding to said given one source value.

4. Method according to any of the preceding claims **characterized in that** the direction in which said adjustement is performed depends on the relative difference between said target value calculated by weighted interpolation ($P_t$) and said minimum and maximum values ($I_{min}, I_{max}$).

5. Method according to any of the preceding claims **characterized in that** use is made of weighted interpolation on the basis of a non-linear density distribution which assigns a heavier weighting to source values located closer in the grid than to source values located further. away, in particular a Gaussian distribution, at least an exponential density distribution.

6. Method according to any of the preceding claims **characterized in that** a source value ($S_{0,0}$) which lies in the grid closest to the target value to be determined, is taken as origin of a first region (B) extending over a finite number of mutually adjacent source values and that the local maximum and the local minimum are determined in this first region.

7. Method as claimed in claim 6, **characterized in that** the measure of dynamics of the source values is determined in a second region (B) extending over a finite number of mutually adjacent source values, which second region is optionally of the same size as the first region in which the local maximum and minimum are determined.

8. Method as claimed in claim 7, **characterized in that** the measure of dynamics is derived from absolute normalized differences between source values in said second region ($I_{ij}$, $ij \in B$) and an average ($I_{gem}$ $(i,j)$) of all source values in said further local region (C).

9. Method as claimed in claim 8, **characterized in that** for the average of all source values
    in said further local region (C) a weighted average is taken which assigns a heavier weighting to source values located closer in the grid than to source values located further away and which particularly utilizes anon-linear density distribution for the purpose of determining the weighting factors and more particularly from a Gaussian distribution, at least from an exponential density distribution.

10. Method according to any of the preceding claims **characterized in that** the final target value is a weighted average of the target value determined on the basis of interpolation and the local maximum and minimum, wherein a weighting factor is employed which depends on average local dynamics of the source values located around the target value to be determined and the relative location of the target value determined on the basis of interpolation relative to the local maximum and minimum.

11. Method according to any of the preceding claims **characterized in that** for all source values an associated local minimum and maximum and an associated dynamic value are determined beforehand so as to be read for the purpose of determining the target value.

12. Method according to any of the preceding claims **characterized in that** the source values comprise separate numerical values for separate information components in the source data and that for each information component individually a target value located among the source values is determined for this information component.

13. Method as claimed in claim 12, **characterized in that** the data comprises the pixels of an image with a separate discrete source value for each basic colour therein and that for each basic colour individually a target value located among the source values is determined.

14. A computer loaded with software for performing the method as claimed in one or more of the preceding claims.

**15.** Software for performing the method as claimed in one or more of the claims 1-13 in a computer.


**Patentansprüche**

**1.** Verfahren zur Bearbeitung von Daten in der Form eines Gitters von diskreten Quellwerten, worin zumindest ein Zielwert (T) innerhalb eines Bereiches (A) von Quellwerten vermittels gewichteter Interpolation in dem Bereich (A) von Quellwerten bestimmt wird,
**dadurch gekennzeichnet,**
**daß** ein minimaler Wert ($I_{min}$) und ein maximaler Wert ($I_{max}$) innerhalb eines lokalen Bereiches (B) von Quellwerten um den Zielwert (T) bestimmt werden, dadurch, daß ein Maß der Dynamiken innerhalb eines lokalen Bereiches (B) von Quellwerten um den Zielwert (T) bestimmt wird und dadurch,
**daß** der Zielwert wie durch gewichtete Interpolation bestimmt in der Richtung von entweder dem Minimalwert oder dem Maximalwert auf der Basis des bestimmten Maßes der Dynamiken angepaßt wird.

**2.** Verfahren nach Anspruch 1, **dadurch gekennzeichnet, daß** das Maß der Dynamiken als ein normalisierter gewichteter Wert der absoluten Differenzen ($\|I_{ij}-I_{gem}\|$) von Quellwerten innerhalb des lokalen Bereiches (B) bestimmt wird.

**3.** Verfahren nach Anspruch 2, **dadurch gekennzeichnet, daß** eine der absoluten Differenzen ($\|I_{ij}-I_{gem(ij)}\|$) für jeden der Quellwerte in dem lokalen Bereich (B) berechnet wird, und dadurch, daß jede Differenz ($\|I_{ij}-I_{gem(ij)}\|$) zwischen einem gegebenen ($I_{ij}$, ij∈B) der Quellwerte und einem gewichteten Mittelwert ($I_{gem(ij)}$) der Quellwerte in einem weiteren lokalen Bereich (C) entsprechend dem gegebenen einen Quellwert berechnet wird.

**4.** Verfahren nach einem der vorhergehenden Ansprüche, **dadurch gekennzeichnet, daß** die Richtung, in welcher die Einstellung bewirkt wird, von der relativen Differenz zwischen dem Zielwert, der durch gewichtete Interpolation ($P_t$) berechnet wird, und den minimalen und maximalen Werten ($I_{min}$, $I_{max}$) abhängt.

**5.** Verfahren nach einem der vorhergehenden Ansprüche, **dadurch gekennzeichnet, daß** von gewichteter Interpolation auf der Basis einer nichtlinearen Dichteverteilung Gebrauch gemacht wird, welche Quellwerten, die im Gitter näher liegen, ein größeres Gewicht zuordnet als Quellwerten, die weiter entfernt liegen, insbesondere einer Gauss-Verteilung, zumindest einer exponentiellen Dichteverteilung.

**6.** Verfahren nach einem der vorhergehenden Ansprüche, **dadurch gekennzeichnet, daß** ein Quellwert ($S_{0,0}$), welcher in dem Gitter am nächsten zu dem zu bestimmenden Zielwert liegt, als Ursprung eines ersten Bereiches (B), der sich über eine finite Anzahl wechselseitig benachbarter Quellwerte erstreckt, genommen wird und daß das lokale Maximum und das lokale Minimum in diesem ersten Bereich bestimmt werden.

**7.** Verfahren nach Anspruch 6, **dadurch gekennzeichnet, daß** das Maß der Dynamiken der Quellwerte in einem zweitem Bereich (B) bestimmt wird, der sich über eine finite Anzahl von wechselseitig benachbarten Quellwerten erstreckt, welcher zweite Bereich optional von derselben Größe wie der erste Bereich ist, in welchem das lokale Maximum und Minimum bestimmt werden.

**8.** Verfahren nach Anspruch 7, **dadurch gekennzeichnet, daß** das Maß der Dynamiken aus absoluten, normalisierten Differenzen zwischen Quellwerten in dem zweiten Bereich ($I_{ij}$, ij∈B) und einem Mittel ($I_{gem}(i,j)$) aller Quellwerte in dem weiteren lokalen Bereich (C) hergeleitet wird.

**9.** Verfahren nach Anspruch 8, **dadurch gekennzeichnet, daß** für das Mittel aller Quellwerte in dem weiteren lokalen Bereich (C) ein gewichtetes Mittel genommen wird, welches Quellwerten, die im Gitter näher liegen, ein größeres Gewicht zuordnet als Quellwerten, die weiter entfernt liegen, und welches insbesondere von einer nichtlinearen Dichteverteilung für den Zweck der Bestimmung der Gewichtungsfaktoren und insbesondere von einer Gaus-Verteilung, zumindest einer exponentiellen Dichteverteilung, Gebrauch macht.

**10.** Verfahren nach einem der vorhergehenden Ansprüche, **dadurch gekennzeichnet, daß** der finale Zielwert ein gewichtetes Mittel des Zielwertes ist, der auf der Basis der Interpolation und des lokalen Maximums und Minimums bestimmt wird, worin ein Gewichtungsfaktor verwendet wird, welcher von mittleren lokalen Dynamiken der Quellwerte, die um den zu bestimmenden Zielwert angeordnet sind, und dem relativen Ort des Zielwertes, bestimmt auf der Basis der Interpolation relativ zu dem lokalen Maximum und Minimum, abhängt.

**11.** Verfahren nach einem der vorhergehenden Ansprüche, **dadurch gekennzeichnet, daß** für alle Quellwerte ein zugehöriges lokales Minimum und Maximum und ein zugehöriger Dynamikwert zuvor bestimmt werden, um so für die Zwecke der Bestimmung des Zielwertes gelesen zu werden.

**12.** Verfahren nach einem der vorhergehenden Ansprüche, **dadurch gekennzeichnet, daß** die Quellwerte separate numerische Werte für separate Informationskomponenten in den Quelldaten umfassen und daß für jede Informationskomponete individuell ein Zielwert, der zwischen den Quellwerten angeordnet ist, für diese Informationskomponente bestimt wird.

**13.** Verfahren nach Anspruch 12, **dadurch gekennzeichnet, daß** die Daten die Pixel eines Bildes mit einem separaten diskreten Quellwert für jede Grundfarbe darin umfassen und daß für jede Grundfarbe individuell ein Zielwert bestimmt wird, der zwischen den Quellwerten angeordnet ist.

**14.** Ein Computer, der mit Software zur Durchführung des Verfahrens nach einem der vorhergehenden Ansprüche geladen ist.

**15.** Software zur Durchführung des Verfahrens nach einem der Ansprüche 1 - 13 in einem Computer.


**Revendications**

**1.** Procédé pour traiter des données sous la forme d'une grille de valeurs sources discrètes, dans lequel au moins une valeur cible (T) dans une région (A) de valeurs sources est déterminée par l'intermédiaire d'une interpolation pondérée dans ladite région (A) de valeurs sources, **caractérisé en ce qu'**une valeur minimum (Imin) et une valeur maximum ($I_{max}$) sont déterminées dans une région locale (B) de valeurs sources autour de la valeur cible (T), **en ce qu'**une mesure de dynamiques est effectuée dans une région locale (B) de valeurs sources autour de la valeur cible (T) et **en ce que** la valeur cible telle que calculée par une interpolation pondérée est ajustée dans la direction de ladite valeur minimum ou de ladite valeur maximum sur la base de ladite mesure déterminée de dynamiques.

**2.** Procédé selon la revendication 1, **caractérisé en ce que** ladite mesure de dynamiques est déterminée comme une valeur pondérée normalisée des différences absolues ($\|I_{ij} - I_{gem}\|$) de valeurs sources dans ladite région locale (B).

**3.** Procédé selon la revendication 2, **caractérisé en ce que** l'une desdites différences absolues ($\|I_{ij} - I_{gem(ij)}\|$) est calculée pour chacune des valeurs sources dans ladite région locale (B), et **en ce que** chacune desdites différences ($\|I_{ij} - I_{gem(ij)}\|$) est calculée entre une première valeur donnée ($I_{ij}$, $ij \in B$) desdites valeurs sources et une moyenne pondérée ($I_{gem(ij)}$) de valeurs sources dans une région locale supplémentaire (C) correspondant à ladite première valeur source donnée.

**4.** Procédé selon l'une quelconque des revendications précédentes, **caractérisé en ce que** la direction dans laquelle ledit ajustement est effectué est fonction de la différence relative entre ladite valeur cible calculée par une interpolation pondérée ($P_i$) et lesdites valeurs minimum et maximum ($I_{min}$, $I_{max}$).

**5.** Procédé selon l'une quelconque des revendications précédentes, **caractérisé en ce qu'**une utilisation est faite d'une interpolation pondérée sur la base d'une distribution de densité non-linéaire qui affecte une pondération plus lourde à des valeurs sources situées plus proches de la grille qu'à des valeurs sources situées de manière plus éloignée, en "particulier d'une distribution gaussienne, au moins d'une distribution de densité exponentielle.

**6.** Procédé selon l'une quelconque des revendications précédentes, **caractérisé en ce qu'**une valeur source ($S_{o,o}$) qui se trouve dans la grille la plus proche de la valeur cible à déterminer, est prise en tant qu'origine d'une première région (B) s'étendant sur un nombre fini de valeurs sources mutuellement adjacentes et **en ce que** le maximum local et le minimum local sont déterminés dans cette première région.

**7.** Procédé selon la revendication 6, **caractérisé en ce que** la mesure de dynamiques des valeurs source est déterminée dans une seconde région (B) s'étendant sur un nombre fini de valeurs sources mutuellement adjacentes, laquelle seconde région est de manière facultative de la même taille que la première région dans laquelle le maximum et le minimum locaux sont déterminés.

**8.** Procédé selon la revendication 7, **caractérisé en ce que** la mesure de dynamiques est dérivée de différences normalisées absolues entre des valeurs sources dans ladite seconde région ($I_{ij}$, $ij \in B$) et une moyenne ($I_{gem(i,j)}$) de toutes les valeurs sources de ladite région locale supplémentaire (C).

**9.** Procédé selon la revendication 8, **caractérisé en ce que**, pour la moyenne de toutes les valeurs sources, dans ladite région locale supplémentaire (C), une moyenne pondérée est prise qui affecte une pondération plus lourde à des valeurs sources situées plus proches dans la grille qu'à des valeurs sources situées de manière plus éloignée et qui utilise en particulier une distribution de densité non-linéaire dans le but de déterminer les facteurs de pondération et de manière plus particulière à partir d'une distribution gaussienne, au moins à partir d'une distribution de densité exponentielle.

**10.** Procédé selon l'une quelconque des revendications précédentes, **caractérisé en ce que** la valeur cible finale est une moyenne pondérée de la valeur cible déterminée sur la base de l'interpolation et des maximum et minimum locaux, dans lequel un facteur de pondération est utilisé qui est fonction de dynamiques locales moyennes des valeurs sources situées autour de la valeur cible à déterminer et de l'emplacement relatif de la valeur cible déterminée sur la base d'une interpolation par rapport aux maximum et minimum locaux.

**11.** Procédé selon l'une quelconque des revendications précédentes, **caractérisé en ce que**, pour toutes les valeurs sources, un minimum et un maximum locaux associés et une valeur dynamique associée sont déterminés au préalable de manière à être lus dans le but de déterminer la valeur cible.

**12.** Procédé selon l'une quelconque des revendications précédentes, **caractérisé en ce que** les valeurs source comportent des valeurs numériques séparées pour des composantes informationnelles séparées dans les données sources et **en ce que**, pour chaque composante informationnelle, une valeur cible située parmi les valeurs sources est déterminée individuellement pour cette composante informationnelle.

**13.** Procédé selon la revendication 12, **caractérisé en ce que** les données comportent les pixels d'une image avec une valeur source discrète séparée pour chaque couleur basique dans celle-ci et **en ce que**, pour chaque couleur basique, une valeur cible située parmi les valeurs sources est déterminée individuellement.

**14.** Ordinateur chargé d'un logiciel destiné à effectuer le procédé selon l'une quelconque des revendications précédentes.

**15.** Logiciel destiné à mettre en oeuvre le procédé selon l'une quelconque des revendications 1 à 13 dans un ordinateur.

S

T1

Fig.1

S

T2

# Fig.2

S

T3

Fig.3

S

T1

Fig.4

S

T2

Fig.5

Fig.6

Fig.7